(19) **Europäisches Patentamt**

European Patent Office

Office européen des brevets

(11) **EP 0 634 260 B1**

(12) **EUROPEAN PATENT SPECIFICATION**

(45) Date of publication and mention
of the grant of the patent:
**23.09.1998 Bulletin 1998/39**

(21) Application number: **94304925.4**

(22) Date of filing: **05.07.1994**

(51) Int. Cl.$^6$: **B29B 17/02**, B03B 9/06,
B07C 5/34, G05B 19/418
// B29K105:26

(54) **A method of recycling a used product, and an apparatus for carrying out such method**

Verfahren zur Wiederverwertung eines Altstoffs, und Vorrichtung zur Durchführung des Verfahrens

Procédé pour le recyclage de déchets et dispositif pour la mise en oeuvre du procédé

(84) Designated Contracting States:
**DE FR GB**

(30) Priority: **14.07.1993 JP 173947/93**

(43) Date of publication of application:
**18.01.1995 Bulletin 1995/03**

(73) Proprietor: **Hitachi, Ltd.**
**Chiyoda-ku, Tokyo 101-0062 (JP)**

(72) Inventors:
  • **Kimoto, Hikari**
    **Hitachi-shi, Ibaraki 319-12 (JP)**
  • **Koseki, Yasuo**
    **Hitachioota-shi, Ibaraki 313 (JP)**
  • **Yamashita, Hisao**
    **Hitachi-shi, Ibaraki 316 (JP)**
  • **Miyadera, Hiroshi**
    **Hitachi-shi, Ibaraki 316 (JP)**

(74) Representative:
**Calderbank, Thomas Roger et al**
**MEWBURN ELLIS**
**York House**
**23 Kingsway**
**London WC2B 6HP (GB)**

(56) References cited:
EP-A- 0 068 086          EP-A- 0 070 610
EP-A- 0 166 899          EP-A- 0 389 734
EP-A- 0 389 735          EP-A- 0 441 012
US-A- 4 162 880

• DATABASE WPI Section Ch, Week 9429, Derwent
  Publications Ltd., London, GB; Class ACE, AN
  94-238077 C29 & JP-A-06 170 848 (TOYOTA
  CHUO KENKYUSHO K.K AND TOYOTA JIDOSHA
  K.K.) 21 June 1994
• KUNSTSTOFFE EUROPE, no.2, August 1991,
  MüNCHEN, DE page 160 (FROM THE EDITOR)
  'New standardized recycling insert for definite
  product marking to facilitate clean material type
  recycling'
• MODERN PLASTICS INTERNATIONAL, vol.23,
  no.7, July 1993, LAUSANNE, CH pages 13 - 16
  ERIC CULP AND ROBERT LEAVERSUCH
  'Recycling: Optics and sensors reduce bottle-
  sorting labor'
• ZWF CIM ZEITSCHRIFT FüR
  WIRTSCHAFTLICHE FERTIGUNG UND
  AUTOMATISIERUNG, vol.84, no.7, July 1989,
  MüNCHEN, DE pages 420 - 423, XP000086832 A.
  FEIL ET AL. 'Materialflusssysteme in der flexibel
  automatisierten Fertigung'
• TECHNISCHE RUNDSCHAU, vol.83, no.22,
  February 1991, BERN, CH pages 46 - 50,
  XP000219460 R. THUMM 'Alles ist Bewegung'

## Description

The present invention relates to a method of recycling a used product. It also relates to an apparatus for recycling a used product.

It is becoming increasingly desirable to recycle materials from used products. When the product is of a single material, such as a glass bottle or aluminum can, recycling is relatively straightforward. However, most products are made of more than one material, and also it is not always practical to collect only products of a single type. In refuse collection, for example, products of many different types will be mixed.

Therefore, it is also well known to separate used products into components, each component being normally of a single material. Sometimes, where one product of a mixture of products is made of a single material, that product itself may be considered a "component" and separated from other products in a mixture of products, but normally more complex products will have to be broken down into separate components before recycling can occur.

The method used to separate the components will depend on the types of products. For example, US Patent Specification No. 4,187,775 proposes that a mixture of products be separated into components, with those components identified according to the type of material and also to the source of the product. As a further development, in order to more clearly identify the components in a product, the products may be disassembled or crushed. This is also mentioned in US Patent Specification 4,187,775 referred to above.

In the known recycling methods discussed above, it is assumed that the material of a component can be used directly once that component has been separated from the used product, or from a mixture of used products. It has been realized that this is not applicable to materials which change their nature with time. For example, plastics or rubber materials will normally degrade with time, and metals may have increasing amounts of oxidation. Hence, simple separation of the used products into components of different materials may not necessarily result in suitable materials for recycling.

Therefore, proposals have been made to assess the suitability of a used product for recycling. In EP-A-0166899, the oxidation rate of the plastics materials of the product were determined.

Similarly, EP-A-0068086, the ageing of plastics materials was determined using IR techniques. In each case, the assessment was used to determine whether the product was directly reused or recycled by a predetermined recycling resource producing process.

According to a first aspect of the present invention there is provided a method of recycling a used product as defined in appended claim 1.

According to a second aspect of the present invention there is provided an apparatus for recycling a used product as defined in appended claim 13.

Normally, with the present invention, it is first necessary to divide the used product into separation components. Normally, each component will be of one material only. However, sometimes it is impossible to ensure that the component is of only one type of material, in which cases the assessment of the degree of degradation will be on the basis of the principal material present in the component.

Thus, for example, if a component is of a plastics material, the degrees of degradation can be assessed prior to any further recycling of that component. If the degree of degradation is so great that the component is unsuitable for making further products, then it can be discarded. Otherwise, the use of that component can be selected on the basis of the degree of degradation.

It should be noted that an article entitled "Material Grade Classification System for Recycled Plastics" by E.G. Christiansen, published in Regional Technical Conference on Plastics Recycling in New England, (1991) pp 119 to 127 proposed that a standard classification system should be established to enable assessment of the quality of a recycled product to be made. That article was a theoretical analysis of the need for such a classification system which classification system did not exist at the time of the article.

There are many ways in which the degree of degradation of the material of the component can be assessed. In some cases, the age of the material may be available from information about the product. In that case, the assessment may be carried out on the basis of the age thus determined. For example, products often carry labels or other displays which indicate manufacturing information, and that manufacturing information may enable the date of manufacture to be determined, either because it is present within the information displayed, or because it can be derived from e.g. a database. However, in many cases, such information will not be available, in which case the degree of degradation will have to be assessed by making measurements of physical properties of the component, and by comparing those physical properties with reference values for the materials of the component. For example, as a plastics material degrades, its color or its density may change and this will enable the degree of degradation to be determined.

It should be noted that such assessment of the degree of degradation may depend on the materials of each component. Some materials will degrade more than others in a given time, depending on the conditions to which the product has been exposed. Therefore, it is normally necessary to identify the or each material forming each component before the assessment is carried out. Also, for any given used product, the present invention need not be applied to all the components thereof. For example, if one of the components is of a material which does not degrade, then that material can be recycled directly. The present invention then needs to be applied only to those materials which are likely to have degraded.

It may not always be possible to determine the degree of degradation for all components. This is particularly true when the components are of composite materials, since it may be difficult to establish degradation references against which the degradation of any particular component can be assessed. Then, it will be necessary to estimate the degree of degradation of those components. Then, the degree of degradation of at least one of the components is assessed, whilst the degree of degradation of one or more other components is estimated. Recycling is then carried out on the basis of the degrees of degradation of the respective components.

Preferably, the estimating of the degree of degradation for those components where measurement of the degree of degradation is not practical is on the basis of the assessment of the degree of degradation of those components where that assessment is practical. Since the components come from the same used product, it can be inferred that they have been exposed to similar conditions. Therefore, if the degree of degradation of one component can be assessed, e.g. by measurement of a physical property of that component, then that degree of degradation corresponds to a value for the lifetime of the used product. Using that lifetime thus determined, the degree of degradation of other components can be estimated.

Of course, the lifetime determination thus carried out may not represent the true lifetime of the product, but represents a "degradation lifetime", i.e. a lifetime corresponding to particular conditions resulting in the degree of degradation determined. For example, degrees of degradation of plastics materials can be established assuming those plastics materials are continuously exposed to external conditions, and then the degradation lifetime of the used product can be determined on the basis that it has been continuously exposed (even if this is not the case). Then, the degree of degradation of other components can be estimated, using the degradation lifetime of the product thus determined, and the exposure on which that degradation lifetime is determined.

When recycling is carried out, one process in the recycling step will depend on materials produced at an earlier step. For example, as described above, it is normally necessary to determine the material of any one component before the degree of degradation thereof can be assessed. On the other hand, a sufficient amount of any given component may be necessary before the degree of degradation can be assessed, and any subsequent recycling of that component may itself need a sufficient amount of the material. However, in recycling, the amount of any one material in a used product, or the number of used products collected together, is not normally predictable. The used products present within a refuse collection may vary greatly, and thus it is not easy to control the amount of material for each process. For this reason, recycling operations normally require that each process have an associated storage site (stockyard, etc) in which material for use in the process is kept until a suitable amount is available. It should be noted that the term "storage site" includes any site in which stock can be kept, including a hopper, bin, as well as a stock room or stockyard.

An embodiment of the present invention will now be described in detail, by way of example, with reference to the accompanying drawings, in which:

Fig. 1 is a schematic block diagram showing the main components of a recycling system for used products according to an embodiment of the present invention;
Fig. 2 is a block diagram illustrating the transfer of materials between successive processes for the embodiment of Fig. 1;
Fig. 3 is a flow chart showing the process carried out by a transfer control unit in the embodiment of Fig. 1;
Fig. 4 is a chart showing the relationship between the properties of different plastics materials;
Fig. 5 is a schematic diagram showing the separation of plastics materials from a mixture thereof;
Fig. 6 is a flow chart showing the separation of plastics materials from a mixture thereof using physical properties of the plastics materials;
Fig. 7 is a graph showing the change in color of polycarbonate resin with time of exposure;
Fig. 8 is a graph showing the change in break point elongation with exposure time for various plastics materials;
Fig. 9 is a graph similar to Fig. 7, but showing the change in color of polycarbonate resin under several different exposure conditions;
Fig. 10 is a graph showing the change of abrasion loss of polyether solfone resin; and
Fig. 11 is a block diagram showing an apparatus for controlling recycling resource material for use with the embodiment of Fig. 1.

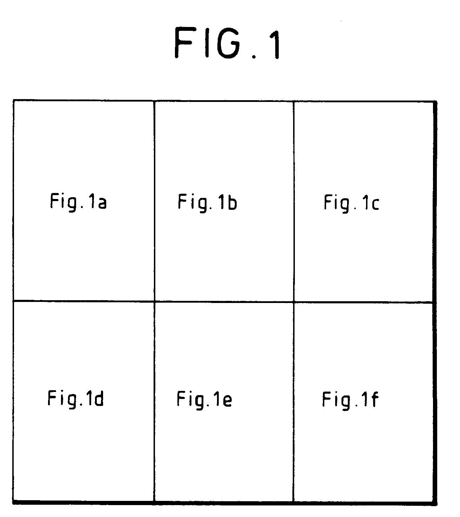

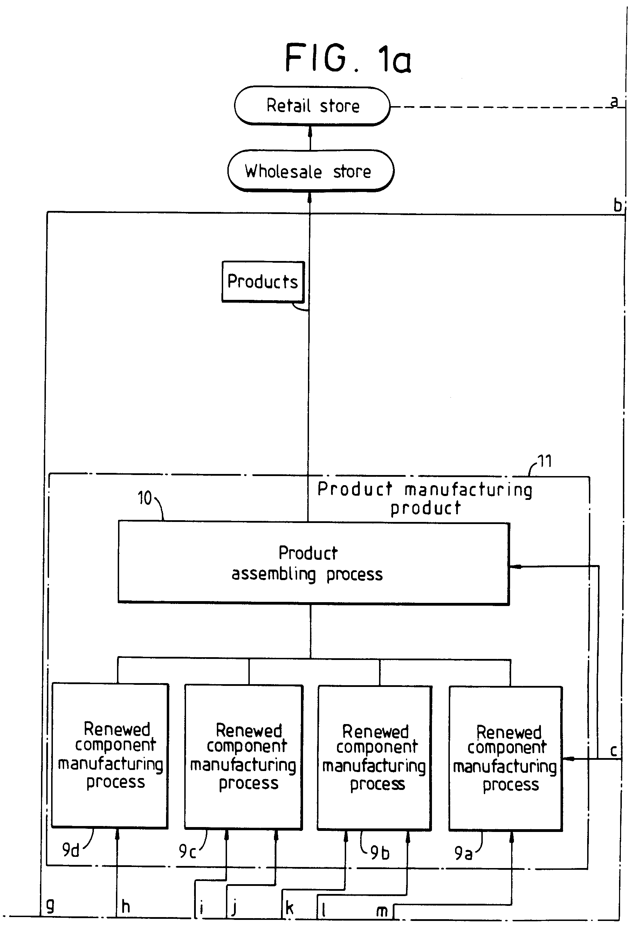

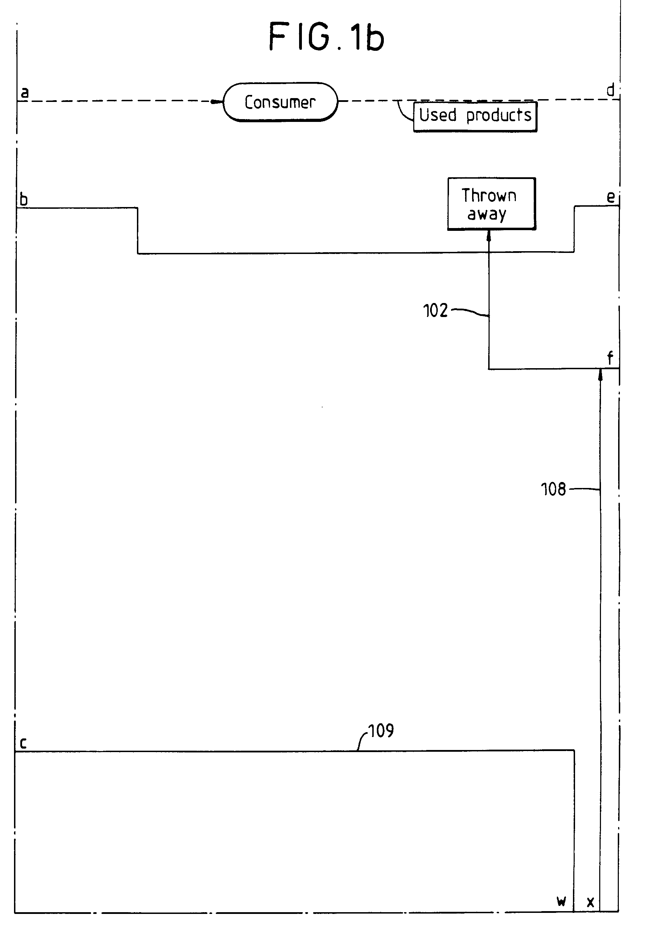

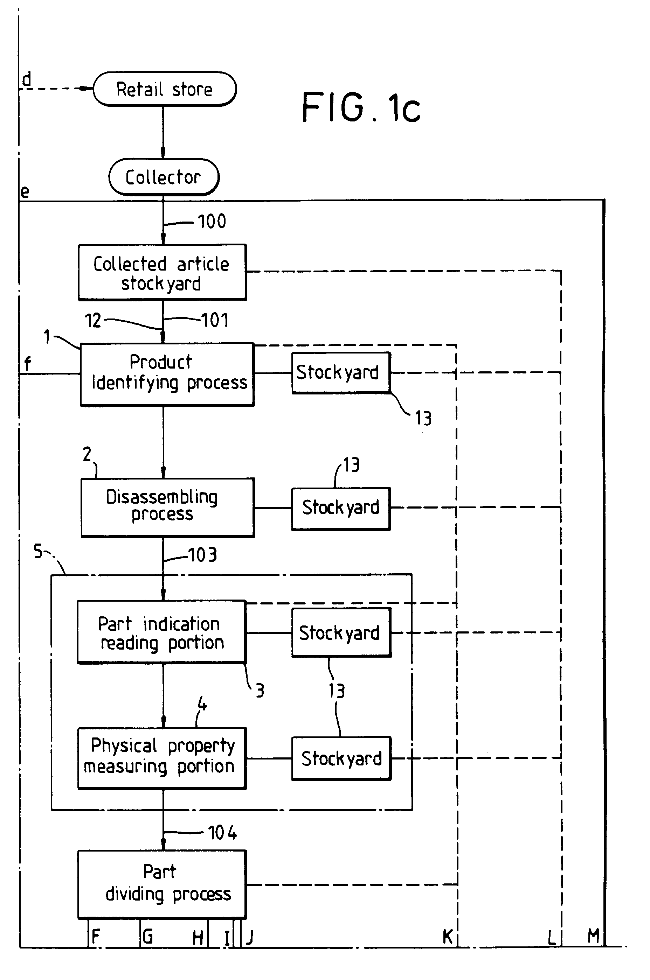

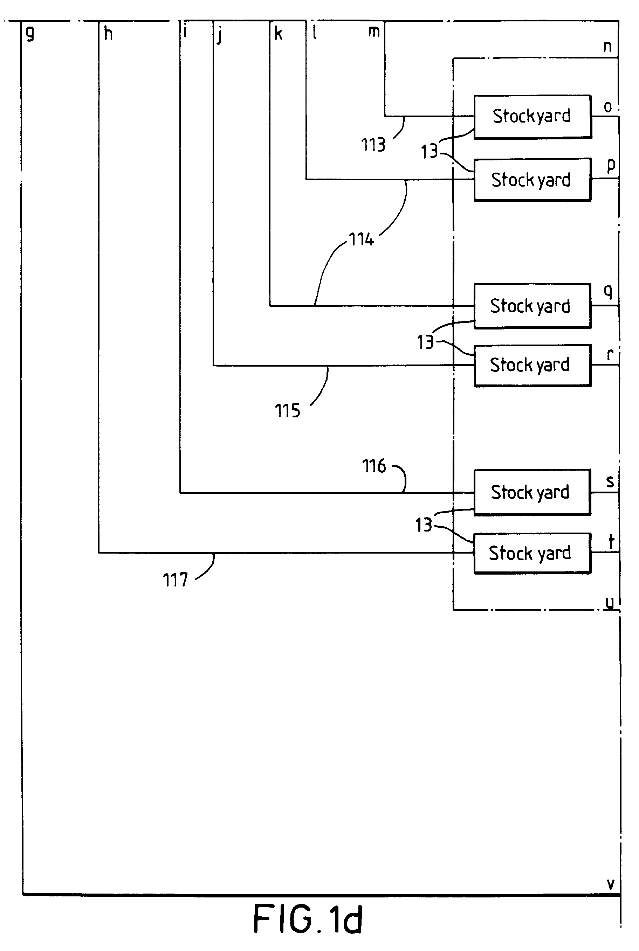

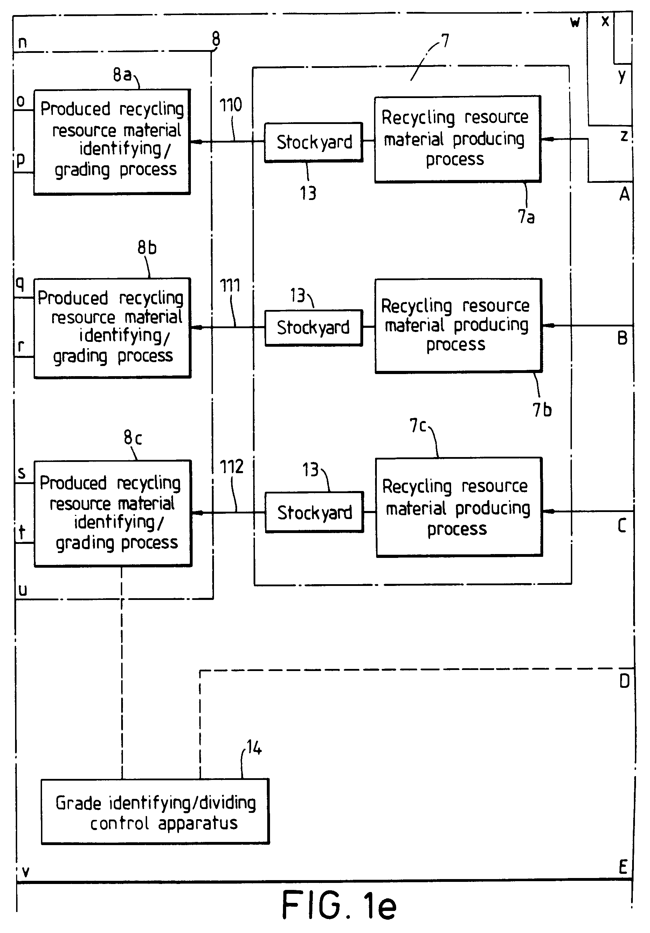

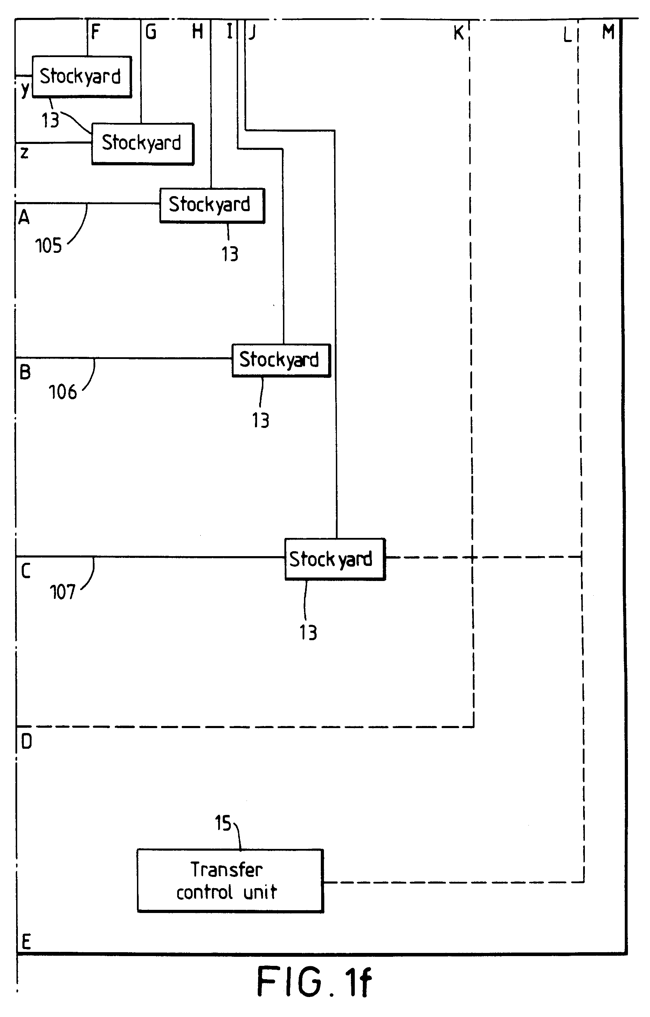

Fig. 1 is a schematic diagram showing an embodiment of a recycling system for used products in accordance with the present invention.

As shown in Fig. 1, the system has a product identifying process 1, a disassembling process 2, a component identifying process 5 comprising a component indication reading portion 3, a physical property measuring portion 4, a component dividing process 6, a recycling resource material producing process 7, a recycling resource material identifying/grading process 8, and a product manufacturing process 11 comprising a renewed component/member manufacturing portion 9 and a product assembling portion 10. In addition to these processes, the system also has a transferring means 12 for transferring components between the various processes, stockyards 13 for products, components and material, one of a grade identifying/dividing control apparatus 14 for components and recycling resource material, a transfer control unit 15 for controlling the input and the output from and transferring of the stockyard for each of the processes.

It should be noted that although the term "stockyard" has been used in the above description, this term in the present specification is not limited to a specific area of land for storage, and includes any storage site, such as a bin, hopper, or stock room.

Used products are collected from consumers through retail stores or collectors and transferred (100) to a collected article stockyard 13a at a works or some other place for temporary storage.

Then the product is transferred (101) to the product identifying process 1, in which any display or label attached to a product such as model number, product number, lot number, manufacture name, manufacturing date of the product is read. This permits the time from manufacture of the used product to be determined directly based on the display or label. Also information about the disassembling procedure for the product, the structural members of the product, they types of materials of components, the main material of the product, the use of the product, the manufacturing date, and whether or not the product already contains recycled material my be obtained from a database. Any used products unfit for recycling, e.g. articles which are too old or are damaged, are thrown away (102) based on the information from the display or label or from visual observation.

In the disassembling process 2, the used product is disassembled according to the information obtained about its disassembling procedure. Disassembling is performed by hand or by an automatic disassembling machine such as a robot. The important components of the used product may be determined from the order of disassembly according to the information about the disassembling procedure for each product.

When the information about structural members, types of materials, manufacturing date, or for main material, use, manufacturing date is derived from a database, the used articles can be graded using the information. The used articles which cannot be graded here are graded in the component identifying process 5, which is described below.

In the component identifying process 5, when the disassembled members or components 103 have displays or labels, permitting information to be derived as discussed above, the degree of degradation of disassembled members or components can be assessed by means of deriving the information directly from the information derived by the component indication reading portion 3 or from the database in the same way as in the product identifying process 1. The used articles, which cannot be assessed here or do not have displays or labels, can be assessed from the results of combinations of various physical properties measured in the physical property measuring portion 4. The main ingredient can be also specified with material dividing means taking into account the shape, dimension, weight and so on. The degree of degradation may be visually specified as well as the measurement of physical properties described above.

The members or components, which have had their degree of degradation determined in the processes above, are divided into grades corresponding to different degrees of degradation in the component dividing process 6 such as high grade A material 105, low grade A material 106, low grade B material 107. Any components unfit for recycling, e.g. which are too old or which have a large degree of degradation or which have large amount of mixtures of materials are thrown away (108). Components having a relatively recent manufacturing date may then be reused the product manufacturing process 11 or are produced as a recycling resource to be used for manufacturing new components. Thus, the component identifying process 5 and the component dividing process 6 may be constructed to be combined as one process.

The displays or labels on the products, members or components in the above process may include: (1) letters or signs, (2) bar codes, (3) marks marked with detectable chemical reagent such as fluorescent chemical reagents added to materials in advance. The means for detecting the displays or labels may be visually performed for letters or signs, or by a machine for bar codes. Where detectable chemical reagents are used, an apparatus to detect the kind or concentration of the chemical reagents is required.

Identification of components by measuring is performed using measurements based on one or a combination of the following measured physical properties of the structural components: color density, deformation temperature (the temperature at which a material starts to deform), brittle temperature (the temperature at which a material becomes brittle), break point elongation, refractive index, thermal conductivity, volume specific resistivity, withstand voltage, dielectric constant, and then the components of materials are judged and the purity and the degree of degradation are specified based on the differences between the physical properties. Then, the materials of identical kind are graded.

Next, in a recycling resource material producing process 7, optimum recycling resource producing processes 7a, 7b, 7c for each of the grades for the components of materials and the degree of degradation are selected for the graded components 105 to 107 respectively to produce reusable materials. In the recycling resource material producing process 7, the components are cleaned, paint removed and crushed if necessary.

Low grade components of low purity or high degree of degradation may be upgraded by adding a reforming agent after being melted by heating or by microwave irradiation if necessary. This is not necessary for high grade components of high purity or low degree of degradation. The following agents, for example, may be added as the reforming agents for plastics materials: plasticizer of 5 ~ 30% such as ester phthalate, stabilizer of 0.05 ~ several % such as lead stearate for PVC or displaced phenols for polyolefine group plastics. Non-melting impurities may be separated and removed with a filter after the material is melted. This process may include a performance developing processor converting process in which the material is converted into other materials by chemical treatment such as decomposition/polymerization, or mixing without separation. Recycling is performed so that polyeurethane, for example, is crushed, an activator for glycol decomposition is added, and then polyole is produced as a raw material.

Each of the recycling materials produced 110 to 112 is specified based on the measured physical properties according to each of the grades 8a, 8b, 8c, and graded based on the results of the recycling resource material identifying/grading process 8. For example, recycling materials 110, 111 produced from material A are graded into high grade 113, middle grade 114, and low grade 115, and the recycling material 112 produced from material B is graded into high grade 117, low grade 116. The recycling resource material identifying/grading process 8 makes use of one or combination of the physical properties of the produced recycling material and the produced recycling material is identified based on the difference between the measured physical property and a standard physical property (derived e.g. from a calibration table which relates the amount of degradation to the physical property being measured). The following properties may be employed for identifying performance and grading: color tensile strength, tensile elongation, bending strength, break point elongation, bending elastic modulus, compression strength, Izot impact value, and/or Rockwell hardness.

Renewed component/member manufacturing processes 9a, 9b, 9c, 9d are selected depending on the grades of the graded produced recycling resource materials 113 to 117 in the product manufacturing process 11, and new products are manufactured in the product assembling process 10.

Identifying and dividing the composition of components, the degree of degradation in the component identifying process 5 and in the component dividing process 6, selecting the treatment processes in the recycling resource material producing process 7, identifying the performance, grading, selecting the renewed component/member manufacturing process 9 are controlled by a grade identifying/dividing control apparatus 14 for components and produced recycling resource material. Information for the database used to derive information from displays or labels on the products is also managed here. For identification of the materials of components by measurement of physical properties, assessment is carried out based on information derived from a comparison between the measured data and a physical property database for standard materials stored in this apparatus 14. In addition, the apparatus also performs delivery transferring control for dividing the components based on the specified grade.

In each process, any surplus of components or material before the process and the processed articles after the process are stored in stockyards 13 for products, components or material placed before and/or after each of the processes, and transferred according to need. The input to and output from each stock room and operating rate of the transferring means are controlled by a transfer control unit 15. The means for transferring articles between the processes is performed by belt conveyer or truck. Each of the processes may be installed inside a works or a site, or may be installed at different sites.

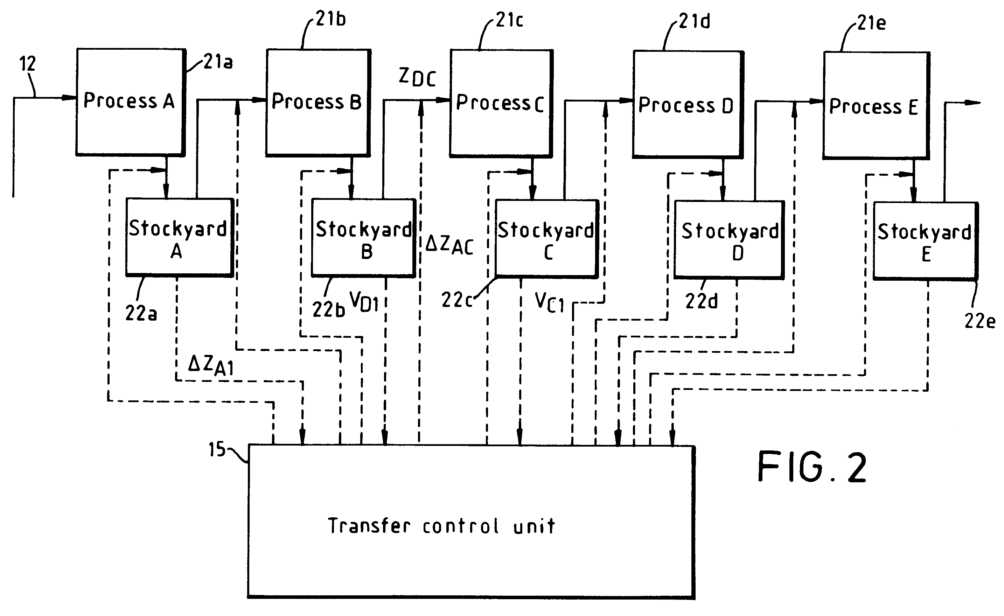

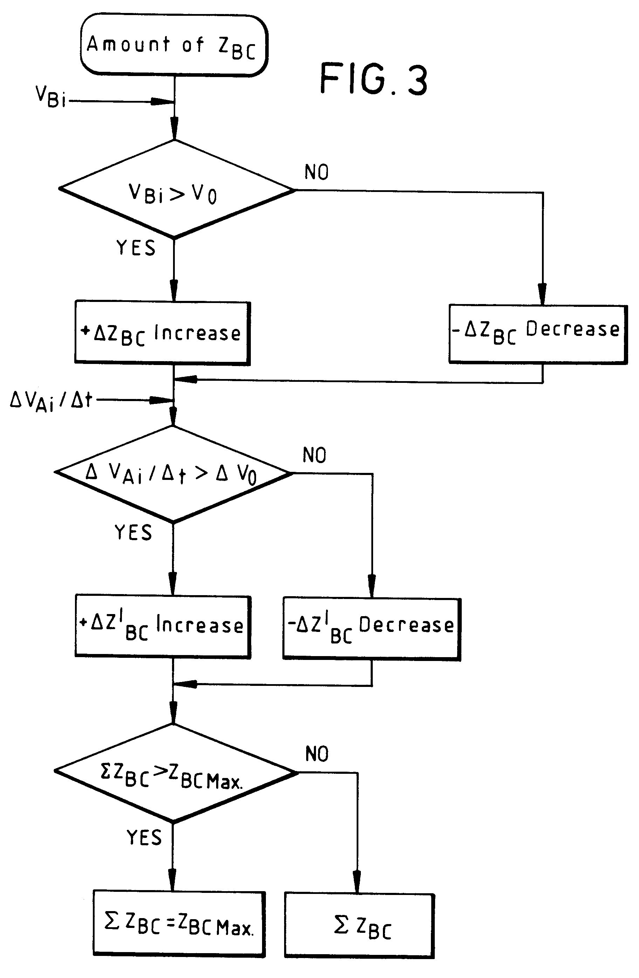

Fig. 2 illustrates a control process in the transferring control unit 15 in accordance with this embodiment of the present invention. Fig. 3 shows the control flow.

Fig. 2 shows five processes (process A 21a, process B 21b, process C 21c, process D 21d, process D 21d), stock rooms (stockyards) for each process (stock room A 22a, stock room B 22b, stock room C 22c, stock room D 22d, stock room E 22e) and transferring means 12 for transferring articles between processes. Although the stock room for each of the processes is provided before (inlet) or after (exit) each of the processes, the stock rooms may be provided both before and after the process, or may be eliminated depending on the distance between the processes.

Input of components or material into a process is controlled on the basis of the amount of stock in the stock room of the immediately preceding process and the change in the amount of stock in the stock room preceding the immediately preceding process. On the other hand, output from the process is controlled on the basis of the amount of stock in the stock room of the immediately succeeding process and the change in the amount of stock in the stock room of the process succeeding the immediately succeeding process. By controlling the processing speed in each of the processes as well as the input and output thereto, the amount of stock in each stock room can be minimized.

Such control of the stock in a stock room (stockyard) is componenticularly important in recycling in that the amount of material available for the process is unpredictable. In manufacturing, new products, raw materials are supplied at a rate which depends on the number of new products to be produced in a given time, and it is normally assumed that the raw materials can be supplied at least as fast as the new products can be produced therefrom. In recycling, however, it is not normally possible to determine in advance how much of a given material will be obtained from any collection of used products, and therefore it is normally necessary to maintain a stock of materials until the amount of material has reached a level which is sufficient for the next process to be carried out on that material. If large stock rooms are to be avoided, efficient control of the stock in the stock rooms, and the transfer therebetween, is needed. Thus, as discussed above, the present invention proposes that the input to a given process is determined not only on the basis of the amount of stock in the preceding stock room, but also taking into account the rate of change of stock in an earlier stockroom in a sequence of processes. Similarly, the output from a stock room is determined not only on the basis of the amount of stock in the stock room of the process to which it is to be transferred, but also taking into account the amount of stock in the next stock room in the series.

Taking process C as an example, the control of the input to process C will be described in detail, referring to the flow chart in Fig. 3. In Fig. 3, $Z_{BC}$ is the input to process C, $V_{Ci}$ is the amount of stock at present in the stock room C preceding process C, $V_{Bi}$ being the amount of stock at present in a stockyard B at the exit of the immediately preceding process, $\Delta V_{Ai}$ is the change in the amount of stock in the stock room A at the exit of the process preceding the immediately preceding process. Then control of the input to the process C ($Z_{BC}$) is determined as follows. For primary control, the amount of stock in the stock room B ($V_{Bi}$) is compared with a reference value $V_0$. If the input $VB_i$ is larger than the reference value $V_o$, $Z_{BC}$ is increased by $\Delta Z_{BC}$ corresponding to the difference. If the input $VB_i$ is smaller than the reference value $V_o$, $Z_{BC}$ is decreased by $\Delta Z_{BC}$ corresponding to the difference. Next, as the secondary control, the change in the amount of stock $\Delta V_{Ai}$ in the stock room A is compared with a reference value $\Delta V_0$. If the change is larger than the reference value, $Z_{BC}$ is increased by $\Delta Z'_{BC}$ corresponding to the difference. If the change is smaller than the reference value, $Z_{BC}$ is decreased by $\Delta Z'_{BC}$ corresponding to the difference. The final value $\Sigma \Delta Z_{BC}$ is determined by combining the result of the primary control and the result of the secondary control. The predetermined values $V_0$ and $\Delta V_0$ are determined based on the maximum amounts which the stock rooms can hold and the processing speeds of the processes. However, since there is a limit value in the input to the process due to the limit in the processing speed of the process, $\Sigma \Delta Z_{BC}$ needs to be limited by the maximum capacity of incomings $Z_{BCmax}$. the final control result cannot exceed $Z_{BCmax}$. Therefore, when $\Sigma \Delta Z_{BC}$ exceeds $Z_{BCmax}$, $\Sigma \Delta Z_{BC} = Z_{BCmax}$. On the other hand, when the processing speeds of the processes are controllable, such a limitation is not necessary. Similarly, the processing speed may be increased/decreased using the reference values for stock amount $V_0$ and for change $\Delta V_0$. Further, when the control is performed using both of the input and the processing speed, the accuracy of control is further increased.

Although the control of the input to the process C has been described above, the output from process C may be similarly controlled using the amount of stock in the stock room immediately of the succeeding process, and change in the amount of stock in the one process succeeding the immediately succeeding process.

For the start and end processes, which do not have preceding or succeeding processes, control is performed using only the information obtainable. For example, when the information about the amount of stock of collected articles in a retail store and a collector is obtainable, the control of the input to the stock room for collected articles at the inlet may be performed using such information. If the information is hard to obtain, only the output is controlled using the information in the subsequent processes. Similarly, the control at the exit, (i.e. a manufacturing process) may be performed using the information from a wholesale store and a retail store. If the information is hard to obtain, only the input is controlled using the information in the preceding processes.

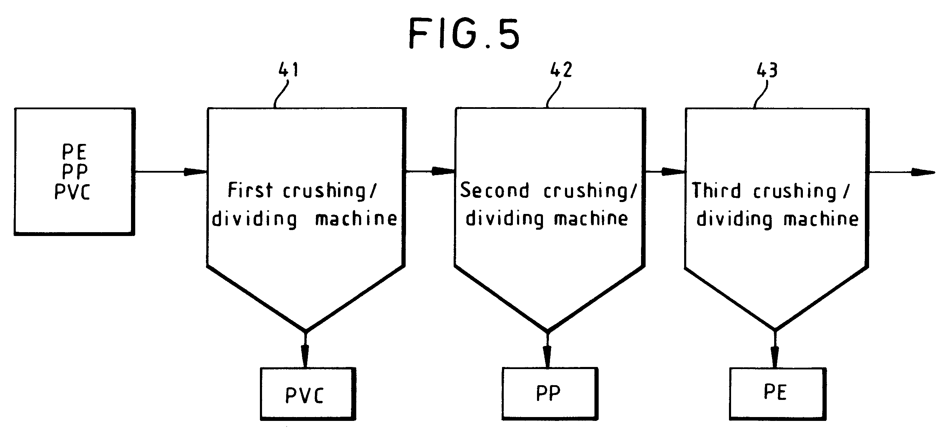

An example of the operations used in the component measuring/identifying process and in the component dividing process in a used product renewing system according to the present invention will now be described, with reference to Fig. 5.

When density is used as the physical property for dividing plastics materials, for example, since the density of polyethylene (PE) resins is 0.90 ~ 0.98, the density of polypropylene (PP) resins is 0.90 ~ 0.96, the density of polystylene (PS) resins is 1.02 ~ 1.15, the density of ABS resins is 1.03 ~ 1.09, the density of polyvinyl chloride (PVC) resins is 1.35 ~ 1.44, plastics materials in components of used products can be divided into three groups: PP resins and PE resins; PS resins and ABS resins; PVC resins.

When the deformation temperature is used as the physical property for dividing plastics materials, the material is gradually heated whilst being compressed at a constant pressure. The initiation of deformation may then be detected by a strain gage. The type and the purity of the material can be determined from the temperature at the initiation of deformation.

For PET resin, for example, the deformation temperature is above 130°C and is therefore higher than that of other thermo-plastic resins (PP, PS, PE, PVC etc.). Therefore, PET resin can be identified. For glass fiber reinforced polypropylene, although the deformation temperature for the virgin material is 140°C, the deformation temperature after three repetitions of melting and freezing is decreased to a value below 130°C. Hence, the degree of degradation can be assessed. By measuring the relationship between impurities and deformation temperatures in advance to make a database, quantitative assessment can be achieved.

Other methods for identifying/dividing plastics materials based on the physical properties can be used. When brittle temperature is used as the physical property for identifying/dividing plastics materials, the material is gradually cooled whilst being compressed at a constant pressure (similar to the case using deformation temperature) Then the initiation of crushing is detected to determine the type of plastics material.

When crushing plastics material at a given temperature, dividing can be performed based on the differences in size of fragments depending on the brittle temperature $T_B$. When materials are a mixture of, for example, PE ($T_B$:-40 ~ -100°C), PP ($T_B$:-10 ~ -30°C) and PVC ($T_B$:80°C), and are fed to a crusher at a temperature of -20°C, the crushed material can then be being screened. Since the brittle temperature of PVC is high, PVC is crushed into small fragments and can be divided from PP and PE, for which the fragments are large in size.

Dividing a mixture composed of many kinds of plastics materials can be performed by repeatedly crushing the mixture while the temperature is being decreased step-wise to separate plastics of successively higher brittle temperature from the mixture one by one. This is shown in Fig. 5. Firstly, the mixture of plastics is fed into a first crushing/dividing machine 41 set at room temperature, being screened after being crushed. PVC has a brittle temperature higher than room temperature, and is therefore crushed into fragments small enough to pass through the mesh of screen to be separated. Next, the mixture is fed into a second crushing/dividing machine 42 set at a temperature of approximately -20°C and PP can be separated in the same way as above. Finally the mixture is fed into a third crushing/dividing machine 43 set at temperature of approximately -90°C and PE can be separated.

Thermal conductivity can also be used for dividing/identifying plastics materials. The thermal conductivity of PE, for example, is 8 ~ 12 ($10^{-4}$ cal/sec/°C/cm) and is much larger than that of other thermo-plastic resins (for example, that of PP is 2.8). Therefore, identifying and dividing using thermal conductivity is possible.

Furthermore, volume specific resistivity can be used for dividing/identifying plastics materials. The volume specific resistivity of ABS, for example, is $10^{13}$ ~ $10^{16}$ ($\Omega$/cm) and is much lower than those of other thermo-plastic resins (except PVC). Therefore, volume specific resistivity can be used for dividing and identifying ABS from other thermo-plastic resins.

The difference in behavior in respect of friction-included electrostatic charge can be used for dividing/identifying plastics materials. For a mixture, for example, which is composed of approximately the same amounts of PP and PE, the mixture is formed into particles, the particles rubbed against each other to be charged, and then dropped down through a electric field. The mixture can be separated with yields of 98% of PP on the positive electrode side and 97.1% of PE on the negative electrode side, since PP receives a negative charge and PE receives a positive charge.

To separate PVC from a mixture composed of many kinds of plastics materials, PVC is separable since only PVC receives a negative charge. In applying the friction electrostatic charging method to a mixture composed of PVC of 31%, PET of 62%, PE of 3% and paper of 4%, the mixture can be separated with yields of PVC of 95% and PET of 99.5%.

The difference in behavior in response to irradiation of X-rays can also be used for dividing/identifying plastics materials. When PVC is irradiated with X-rays, secondary X-rays are emitted from excited chlorine Cl atoms in PVC, and can be observed as a fluorescent X-ray. Therefore, PVC can be estimated and divided by detecting the fluorescent X-ray.

The control method for dividing using physical properties will be described below.

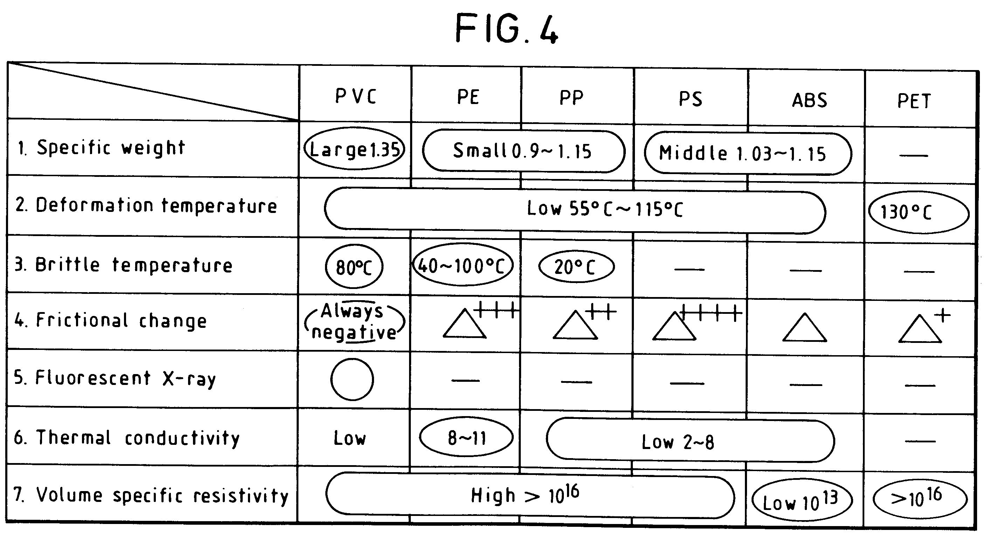

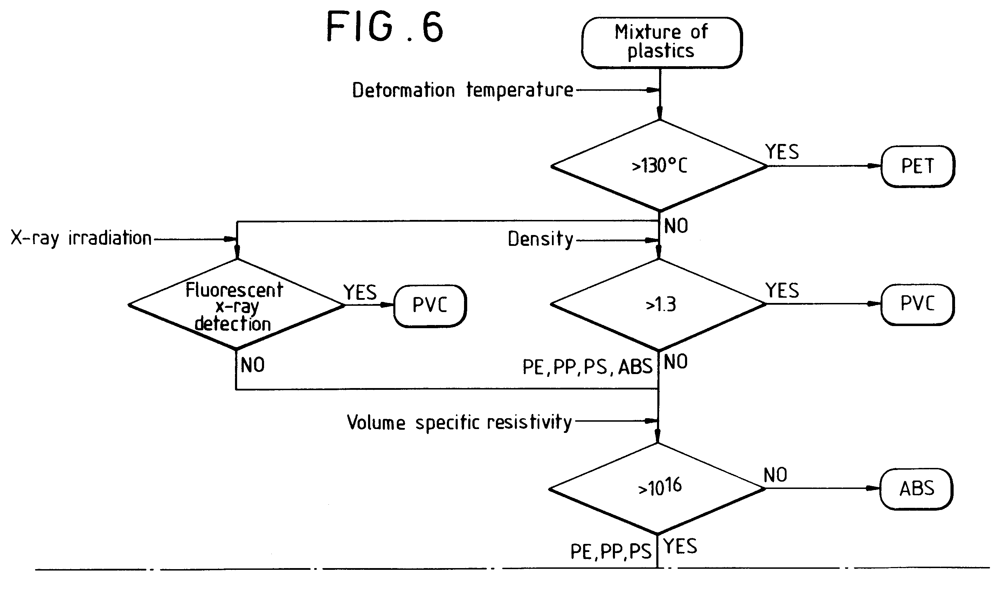

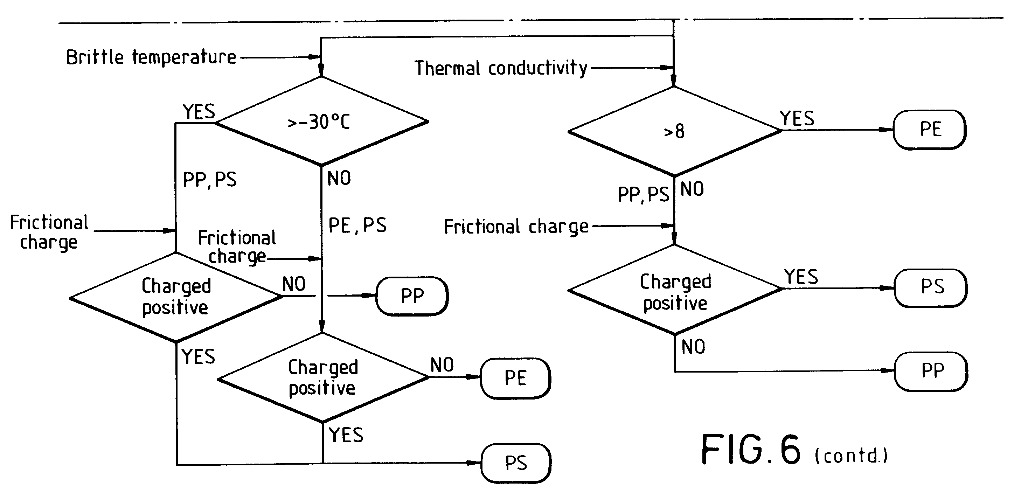

Identifying and separating materials and degree of degradation for a mixture composed of many kinds of plastics can be attained by means of combining in a cascade the material identifying/dividing methods discussed above. Fig. 4 shows method and conditions suitable for identifying and separating typical thermo-plastic resins. As shown in Fig. 4, separating many kinds of plastics materials using only one method is difficult and multiple methods must be used. Fig. 6 is a control flow chart of a material dividing method for thermo-plastic resins constructed by combining these methods.

From a mixed plastics resin composed of PE, PP, PS, PVC, ABS and PET, PET (deformation temperature is above 130°C) is separated with the identifying/dividing method using deformation temperature. Next, PVC is separated from the mixture by identifying those components which have a density greater than 1.3, since Fig. 4 shows that only PVC has such a large density. A mixture of PE, PP, PS and ABS remains. Next, ABS (volume specific resistivity is $10^{13}$) is separated with the identifying/dividing method using volume specific resistivity. PE (thermal conductivity is 8 ~ 11) is separated with the identifying/dividing method using thermal conductivity. The remained mixture of PP and PS is separated into PS (negative electrode side) and PP (positive electrode side) with the identifying/dividing method using frictional charge. Thus, the mixed plastic resin is divided into each type of material.

Instead of making use of density, PVC can be separated by means of a dividing/identifying method using fluorescent X-rays as shown in Fig. 6. Also, for the mixture of PE, PP and PS, a dividing method other than described above can be used. Using deformation temperature, the mixture is divided into a mixture of PE, PS and a mixture of PP, PS. Then, each of the mixtures is divided into PE, PP, PS respectively using a identifying/dividing method using frictional charge.

Once the various components of the mixture have been separated, it is then necessary to assess the degree of degradation thereof. As mentioned previously, when information about structural members, types of materials, or manufacturing dates, has been derived from a label or other display on the used product, or via a database making use of information on a label or other display on the used product, the components can be graded using such information. If such information is not available, however, the components must be graded (re the degree of degradation must be assessed) from the components themselves. Then, in the component identifying process 5, the materials of the components are first identified, and then a physical property of those components is measured by the physical property measuring portion 4.

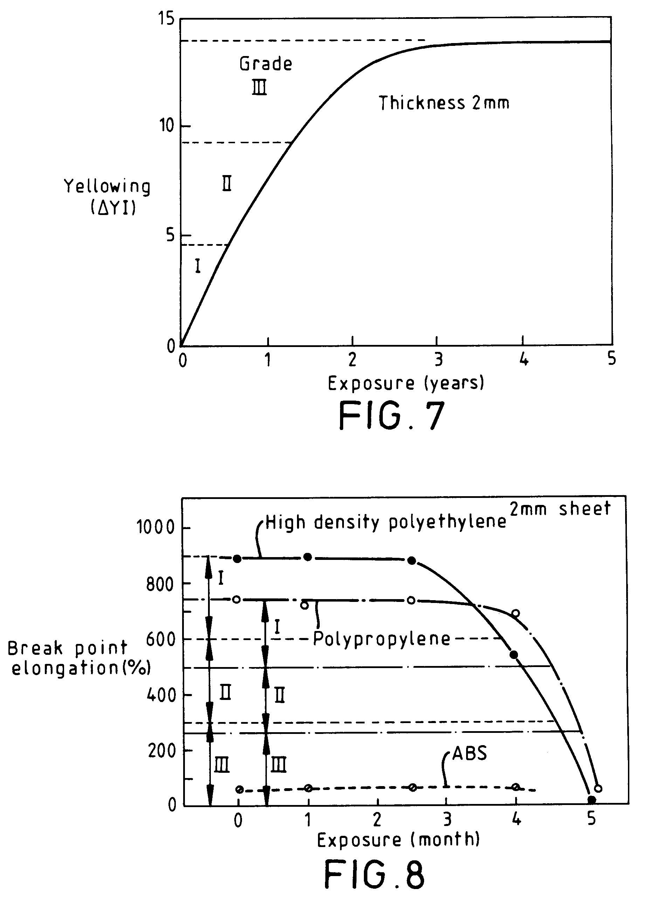

Many different physical properties may be used to assess the degree of degradation, and different physical properties will be appropriate for different materials. One physical property that may be used is the color of the material. For example, polycarbonate resin changes its color to yellow as it degrades. Fig. 7 shows the increase in yellowing of polycarbonate resin with time of exposure. As can been seen, the degree of yellowing saturates after approximately three years exposure. Therefore, this known degree of yellowing may be used as a reference, for assessing the degree of degradation of any polycarbonate resin component. As shown in Fig. 7, three different grades of material can be identified: grade I having a degree of yellowing of zero to 4.7 where is considered to be of high grade, grade II having a degree of yellowing of 4.7 to 9.3 which is graded as a medium grade, and grade III having a degree of yellowing between 9.3 and the saturation value which is graded as low grade.

Since the graph of Fig. 7 assumes that the polycarbonate resin has been exposed to external conditions at all times, a polycarbonate resin component having a given degree of yellowing may, in fact, be older than the graph of Fig. 7 would suggest. This does not matter, since the purpose of the grading of the component is to assess its degree of degradation, and thus the graph of Fig. 7, representing the most rapid degradation of polycarbonate resin, provides a reference against which any given component of polycarbonate resin may be compared to assess the degree of degradation thereof.

Another physical property which may be used is the break point elongation, which decreases with increasing degradation. The results of weathering tests based on break point elongation for various plastics materials are shown in Fig. 8. The break point elongations were measured by using a Sunshine weather meter (spray 12 minutes, 60 cycles, at 45°C) on specimens of 2 mm thick sheets of high density polyethylene, polypropylene, and ABS resin. Again, different grades of materials can be distinguished by measuring the break point elongation.

It can be seen from Fig. 8 that the break point elongation of both high density polyethylene and polypropylene diminishes rapidly after an exposure time greater than three months, and the degree of degradation can be divided into three grades (grade I,II, and III) as before. Again, since Fig. 8 assumes that the materials are constantly exposed to external conditions, the rate of change of break point elongation with time may vary for any given component of the corresponding plastics material, since it may be exposed only intermittently. Again, this does not matter since the graph of Fig. 8 then represents standard conditions against which the degree of degradation can be compared.

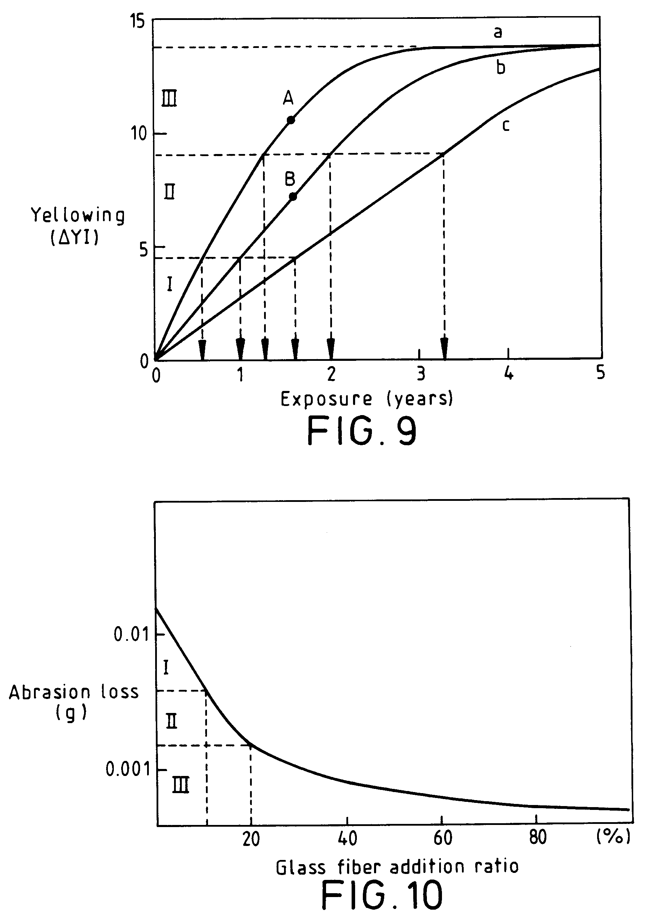

The fact that the degree of degradation may vary depending on the conditions to which the used product has been exposed means that it is preferable to assess the degree of degradation based on physical conditions, rather than merely on manufacturing date derived from e.g. a label or other information. This is illustrated by the graph of Fig. 9, in which the degree of color change of polycarbonate resin is illustrated for three curves a, b and c, representing components which have been exposed to different environmental conditions. Curve a corresponds to full exposure to external conditions, and thus to the curve of Fig. 7. Curves b and c then correspond to lesser degrees of exposure. As shown by points A and B different components of polycarbonate resin having the same age may have different degrees of yellowing, and thus fall into different degradation grades, even though assessment based on age only would give the same grading.

It is also possible to assess the degree of degradation by loss of additives in the component. For example, additives may be lost by abrasion, and the amount of such additives that are lost were given an abrasion operation will vary with the degree of degradation of the component. The graph of Fig. 10 illustrates this for polyether solfone resin to which glass fibre has been added. By measuring the abrasion loss, the glass fibre addition ratio may be determined and the material graded accordingly.

It will be appreciated that it is easier to determine the degree of degradation of some components of a used product than others. In particular, the tables of Figs. 7 to 10 above relate to plastics materials and resin materials, and it may be harder to assess the degree of degradation of other materials by direct measurement of physical properties. However, if a used product is composed of a plurality of composite materials, and it is possible to determine the degree of degradation of one of the composite materials, that information can then be used to estimate the degree of degradation of other of the composite materials.

For example, if one of the components of a used product is of polycarbonate resin, assessment of the yellowing thereof and comparison with the graph of Fig. 7 may be used to determine an estimated exposure time, based on the degree of yellowing. Then, using that estimated exposure time, the degree of degradation of other components of the used product may be estimated, based on other standard degradation curves. Thus, for example, if a component of polycarbonate resin is assessed as being of grade II, based on the degree of yellowing, Fig. 7 shows that it must have been exposed for more than six months, and thus any component of e.g. polypropylene will be of grade III, as can be seen from Fig. 8. It would then not be necessary to determine the break point elongation of such a polypropylene component, since the degree of degradation could be estimated from a measurement of the yellowing of a polycarbonate resin component of the same used product.

The present invention is applicable to many materials. It may be applied to both single materials and composite materials. In particular, it may be applied to:

(1) Single materials;

Thermoplastic resins (polyethylene, polypropylene, polystylene, ABS resin, polyvinyl chloride, polyamide, polyethylene terephthalate, polybutylene terephthalate, poly(methyl methacrylate), polycarbonate, poly(phenylene ether), polyacetal, poly(ether ketone), AS resin, etc.)
Thermosetting resins (phenol resins, urea resins, melamine resins, epoxy resins, unsaturated polyesters, aniline resins, polyurethanes, polyimides, etc.)
Rubbers (Synthetic rubber, natural rubber)
Metals (iron, aluminum, copper, noble metals, rare metals alloys)
Miscellaneous (glass, ceramics, paper, cellulose)

(2) Composite materials;

A combination of at least two kinds of plastics, plastics and metal, plastics and glass, plastics and ceramics, plastics and rubber.

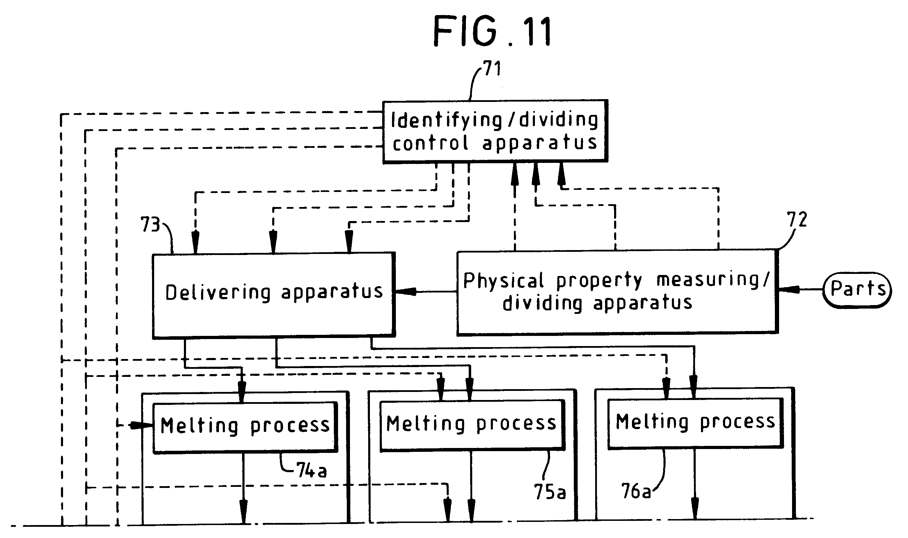

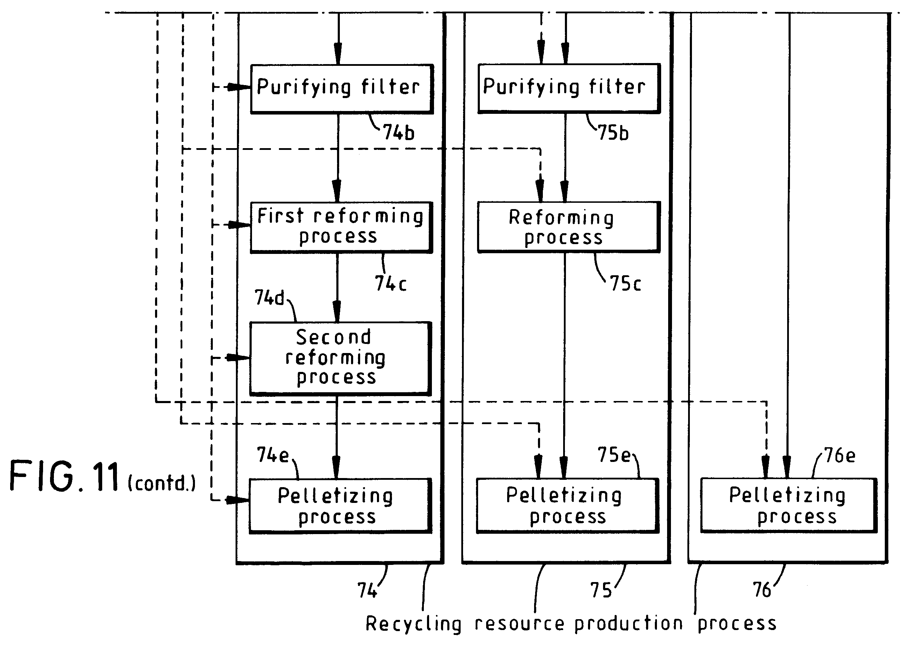

Fig. 11 shows an example of a control method in an identifying/dividing control apparatus for recycling resource material in a system for renewing used products in accordance with the present invention. The control apparatus performs selection of the recycling resource material producing process for identified and assessed components and the transferring control for dividing based on the specified degrees of degradation assessed.

A component identifying apparatus 72 reads a display or label on a disassembled component or measures its physical properties. The information thus derived is transmitted to a identifying/dividing control apparatus 71, ancillary information such as the basic properties of the material, manufacturing date, etc being retrieved from a database using information derived from a display or label. Hence, the degree of degradation of the disassembled component can be assessed. Following this assessment, recycling resource producing processes 74, 75, 76 are selected, a delivering apparatus 73 delivers each grade of material to an appropriate process according to the instruction. Each of the recycling resource producing process has different number of steps and different content. The process 74 comprises a melting process 74a, a purifying filter 74b, a first reforming process 74c, a second reforming process 74d and a pelletizing process 74e. The process 75 comprises a melting process 75a, a purifying filter 75b, a reforming process 75c and a pelletizing process 75e. The process 76 comprises a melting process 76a and a pelletizing process 76e. The treatment condition in each process is controlled according to an instruction based on the physical property information for each material transmitted from the identifying/dividing control apparatus 71. Thus, the duration of reaction time and/or the kind of reforming additive agents are determined by means of comparing the physical property information of each material with the base values for standard materials stored in advance.

According to the present invention, in renewing used products, the quality (degree of degradation) of a recycling resource material is managed to provide stable recycling resource material. Therefore, optimized products suitable for high quality products can be reproduced. In this way, production of recycling resources is repeatable, and effective use of resources can be achieved.

## Claims

1. A method of recycling a used product in which the used product is divided (2) into a plurality of components and recycled (7, 8, 11);
    whereby:

    for at least one of said plurality of components, the degree of degradation of at least one material of said at least one of said components is assessed (3, 4) from a range of degradation values; and
    the recycling (7, 8,11) of said at least one of said components is effected by at least one process selected on the basis of said degree of degradation from a plurality of recycling resource producing processes, the plurality of recycling resource producing processes having different methods and different conditions from each other.

2. A method according to claim 1, wherein each of the materials forming said at least one of said components is assessed prior to said assessing of the degree of degradation of said at least one material.

3. A method according to claim 1 or claim 2, wherein the assessing (3) of the degree of degradation is carried out on the basis of the date of manufacturing of said used product.

4. A method according to claim 1 or claim 2, wherein said assessing (4) of the degree of degradation is carried out on the basis of at least one physical property of said at least one material of said at least one of said components.

5. A method according to claim 4, wherein said at least one physical property is selected from the group consisting of density, deformation temperature, brittle temperature, refractive index, thermal conductivity, volume specific resistivity withstand voltage and dielectric constant.

6. A method according to any one of the preceding claims, wherein the dividing of said used product includes identifying those of said components which are of plastics, and said assessing (3, 4) of the degradation is carried out on the components which are of plastics.

7. A method according to any one of the preceding claims, wherein the dividing (2) of said used product includes identifying those of said components which are of rubber, and said assessing (3, 4) of the degradation is carried out on the components which are of rubber.

8. A method according to any one of the preceding claims, wherein said recycling of said at least one of said components includes adding a reforming agent to said material of said at least one of said components.

9. A method according to any one of the preceding claims, in which only those components for which the degree of degradation of the material thereof is less than a predetermined value are recycled, other components being discarded.

10. A method according to any one of the preceding claims, wherein the degree of degradation of another component of the used product is estimated, and said another product is recycled on the basis of the estimated degree of degradation.

11. A method according to claim 10, wherein the estimating of the degree of degradation is carried out on the basis of the assessing of thee degree of degradation of said at least one of said plurality of components.

12. A method according to claim 10 or claim 11, wherein the assessment of the degree of degradation is carried out on rubber or plastics materials, and the estimating of the degree of degradation is carried out on materials other than rubber of plastics materials.

13. An apparatus for recycling a used product comprising:

means for dividing said used product into a plurality of components;
means for recycling the components;
and means for assessing the degree of degradation of at least one material of said at least one of said components from a range of degradation values;
wherein the recycling means is arranged to operate by a process selected on the basis of said degree of degradation from a plurality of recycling resource producing processes, the plurality of recycling resource producing processes having different methods and different conditions from each other.

14. An apparatus according to claim 13, having means for estimating the degree of degradation of at least one other of said components;
wherein the recycling means is arranged to operate on the respective degrees of degradation.

**Patentansprüche**

1. Verfahren zur Rückführung eines Altprodukts, wobei das Altprodukt in mehrere Bestandteile aufgeteilt (2) und rückgeführt (7, 8, 11) wird, wobei

für mindestens einen der mehreren Bestandteile der Verschlechterungsgrad mindestens eines Stoffes des mindestens einen Bestandteils anhand eines Bereiches von Verschlechterungswerten bewertet wird (3, 4) und
die Rückführung (7, 8, 11) des mindestens einen Bestandteils durch mindestens einen Prozeß erfolgt, der aufgrund des Verschlechterungsgrades aus mehreren Rückführ-Rohstoffgewinnungsprozessen mit voneinander verschiedenen Verfahren und Konditionen ausgewählt wird.

2. Verfahren nach Anspruch 1, wobei jeder der Stoffe, die den mindestens einen Bestandteil bilden, vor der Bewertung des Verschlechterungsgrades des mindestens einen Stoffes bewertet wird.

3. Verfahren nach Anspruch 1 oder 2, wobei die Bewertung (3) des Verschlechterungsgrades aufgrund des Herstelldatums des Altprodukts erfolgt.

4. Verfahren nach Anspruch 1 oder 2, wobei die Bewertung (4) des Verschlechterungsgrades aufgrund mindestens einer physikalischen Eigenschaft des mindestens eines Stoffes des mindestens einen Bestandteils erfolgt.

5. Verfahren nach Anspruch 4, wobei die mindestens eine physikalische Eigenschaft die Dichte, die Verformungstemperatur, die Versprödungstemperatur, der Brechungsindex, die Wärmeleitfähigkeit, der spezifische Volumenwiderstand, die Spannungsfestigkeit und/oder die Dielektrizitätskonstante ist.

6. Verfahren nach einem der vorhergehenden Ansprüche, wobei zur Aufteilung des Altprodukts die Identifizierung derjenigen Bestandteile gehört, die aus Kunststoff bestehen, und die Bewertung (3, 4) der Verschlechterung an den Kunststoffbestandteilen vorgenommen wird.

7. Verfahren nach einem der vorhergehenden Ansprüche, wobei zur Aufteilung (2) des Altprodukts die Identifizierung derjenigen Bestandteile gehört, die aus Gummi bestehen, und die Bewertung (3, 4) der Verschlechterung an den Gummibestandteilen vorgenommen wird.

8. Verfahren nach einem der vorhergehenden Ansprüche, wobei zur Rückführung des mindestens einen Bestandteils der Zusatz eines Umbildungsmittels zu dem Stoff des mindestens einen Bestandteils gehört.

9. Verfahren nach einem der vorhergehenden Ansprüche, wobei nur diejenigen Bestandteile, bei denen der Verschlechterungsgrad des Stoffes unter einem vorgegebenen Wert liegt, rückgeführt und die übrigen Bestandteile weggeworfen werden.

10. Verfahren nach einem der vorhergehenden Ansprüche, wobei der Verschlechterungsgrad eines weiteren Bestandteils des Altprodukts geschätzt und dieser andere Bestandteil aufgrund des geschätzten Verschlechterungsgrades rückgeführt wird.

11. Verfahren nach Anspruch 10, wobei die Schätzung des Verschlechterungsgrades aufgrund der Bewertung des Verschlechterungsgrades des mindestens einen Bestandteils erfolgt.

12. Verfahren nach Anspruch 10 oder 11, wobei die Bewertung des Verschlechterungsgrades an Gummi- oder Kunststoffmaterialien und die Abschätzung des Verschlechterungsgrades an von Gummi und Kunststoff verschiedenen Stoffen erfolgt.

13. Gerät zum Rückführen eines Altprodukts mit

einer Einrichtung zum Aufteilen des Altprodukts in mehrere Bestandteile,
einer Einrichtung zum Rückführen der Bestandteile, und
einer Einrichtung zum Bewerten des Verschlechterungsgrades mindestens eines Stoffes des mindestens einen Bestandteils anhand eines Bereiches von Verschlechterungswerten,
wobei die Rückführeinrichtung so ausgelegt ist, daß sie nach einem Prozeß arbeitet, der aufgrund des Verschlechterungsgrades aus mehreren Rückführ-Rohstoffgewinnungsprozessen mit voneinander unterschiedlichen Verfahren und Konditionen ausgewählt ist.

14. Gerät nach Anspruch 13 mit einer Einrichtung zum Abschätzen des Verschlechterungsgrades mindestens eines weiteren Bestandteils, wobei die Rückführeinrichtung so ausgelegt ist, daß sie nach den jeweiligen Verschlechterungsgraden arbeitet.

## Revendications

1. Procédé de recyclage d'un produit utilisé dans lequel le produit utilisé est divisé (2) en plusieurs composants et recyclé (7, 8, 11) ;
   dans lequel :

   pour au moins un composant parmi lesdits plusieurs composants, le degré de dégradation d'au moins un matériau dudit au moins un composant parmi lesdits composants est évalué (3, 4) à partir d'une plage de valeurs de dégradation ; et
   le recyclage (7, 8, 11) dudit au moins un composant parmi lesdits composants est effectué par au moins un processus sélectionné sur la base dudit degré de dégradation à partir d'une pluralité de processus de production de ressources de recyclage, la pluralité de processus de production de ressources de recyclage comportant des procédés et des états différents les uns des autres.

2. Procédé selon la revendication 1, dans lequel chacun des matériaux formant ledit au moins un composant parmi lesdits composants est évalué avant ladite évaluation du degré de dégradation dudit au moins un matériau.

3. Procédé selon la revendication 1 ou 2, dans lequel l'évaluation (3) du degré de dégradation est réalisée sur la base de la date de fabrication dudit produit utilisé.

4. Procédé selon la revendication 1 ou 2, dans lequel ladite évaluation (4) du degré de dégradation est réalisée sur la base d'au moins une caractéristique physique dudit au moins un matériau dudit au moins un composant parmi lesdits composants.

5. Procédé selon la revendication 4, dans lequel ladite au moins une caractéristique physique est sélectionnée à partir du groupe constitué de la densité, la température de déformation, la température de rupture, l'indice de réfraction, la conductivité thermique, la résistivité volumique spécifique, la tension de maintien et la constante diélectrique.

6. Procédé selon l'une quelconque des revendications précédentes, dans lequel la division dudit produit utilisé comporte l'identification des composants parmi lesdits composants qui sont en matières plastiques, et ladite évaluation (3, 4) de la dégradation est réalisée sur les composants qui sont constitués de matières plastiques.

7. Procédé selon l'une quelconque des revendications précédentes, dans lequel la division (2) dudit produit utilisé comporte l'identification des composants parmi lesdits composants qui sont constitués de caoutchouc, et ladite évaluation (3, 4) de la dégradation est réalisée sur les composants qui sont constitués de caoutchouc.

8. Procédé selon l'une quelconque des revendications précédentes, dans lequel ledit recyclage dudit au moins un composant parmi lesdits composants comporte l'ajout d'un agent d'affinage audit matériau dudit au moins un composant parmi lesdits composants.

9. Procédé selon l'une quelconque des revendications précédentes, dans lequel seuls les composants pour lesquels le degré de dégradation du matériau de ceux-ci est inférieur à une valeur prédéterminée sont recyclés, les autres composants étant jetés.

10. Procédé selon l'une quelconque des revendications précédentes, dans lequel le degré de dégradation d'un autre composant du produit utilisé est estimé, et ledit autre produit est recyclé sur la base du degré estimé de dégradation.

11. Procédé selon la revendication 10, dans lequel l'estimation du degré de dégradation est réalisée sur la base de l'évaluation de degré de dégradation dudit au moins un composant parmi lesdits plusieurs composants.

12. Procédé selon la revendication 10 ou 11, dans lequel l'évaluation du degré de dégradation est réalisée sur les matériaux en caoutchouc ou en matière plastique, et l'estimation du degré de dégradation est réalisée sur les matériaux autres que les matériaux en caoutchouc ou en matière plastique.

13. Appareil pour recycler un produit utilisé, comportant :

des moyens pour diviser ledit produit utilisé en plusieurs composants ;
des moyens pour recycler les composants ;
et des moyens pour évaluer le degré de dégradation d'au moins un matériau dudit au moins un composant parmi lesdits composants à partir d'une plage de valeurs de dégradation ;
dans lequel les moyens de recyclage sont agencés pour fonctionner selon un processus sélectionné sur la base dudit degré de dégradation à partir d'une pluralité de processus de production de ressources de recyclage, la pluralité de processus de production de ressources de recyclage comportant des procédés et des états différents les uns des autres.

14. Appareil selon la revendication 13, ayant des moyens pour estimer le degré de dégradation d'au moins un autre composant parmi lesdits composants ;
dans lequel les moyens de recyclage sont agencés pour fonctionner selon le degré respectif de dégradation.

# FIG.1

| | | |
|---|---|---|
| Fig.1a | Fig.1b | Fig.1c |
| Fig.1d | Fig.1e | Fig.1f |

# FIG. 1a

Retail store ------------------------------------------------------ a

Wholesale store

b

Products

```
11
Product manufacturing
product
```

```
10
Product
assembling process
```

c

| Renewed component manufacturing process | Renewed component manufacturing process | Renewed component manufacturing process | Renewed component manufacturing process |
|---|---|---|---|
| 9d | 9c | 9b | 9a |

g    h        i  j    k    l        m

14

# FIG.1b

a       Consumer     Used products     d

b     Thrown away     e

102

f

108

109

c

w   x

FIG. 1c

FIG.1d

FIG. 1e

FIG. 1f

FIG. 2

EP 0 634 260 B1

FIG. 3

Amount of $Z_{BC}$

$V_{Bi}$

$V_{Bi} > V_0$ — NO → $-\Delta Z_{BC}$ Decrease

YES

$+\Delta Z_{BC}$ Increase

$\Delta V_{Ai} / \Delta t$

$\Delta V_{Ai} / \Delta t > \Delta V_0$ — NO

YES

$+\Delta Z^I_{BC}$ Increase    $-\Delta Z^I_{BC}$ Decrease

$\Sigma Z_{BC} > Z_{BC\,Max.}$ — NO

YES

$\Sigma Z_{BC} = Z_{BC\,Max.}$    $\Sigma Z_{BC}$

# FIG. 4

| | PVC | PE | PP | PS | ABS | PET |
|---|---|---|---|---|---|---|
| 1. Specific weight | Large 1.35 | Small 0.9~1.15 | | Middle 1.03~1.15 | | — |
| 2. Deformation temperature | Low 55°C~115°C | | | | | 130°C |
| 3. Brittle temperature | 80°C | 40~100°C | 20°C | — | — | — |
| 4. Frictional change | Always negative | △ +++ | △ ++ | △ ++++ | △ | △ + |
| 5. Fluorescent X-ray | ◯ | — | — | — | — | — |
| 6. Thermal conductivity | Low | 8~11 | Low 2~8 | | — | — |
| 7. Volume specific resistivity | High > $10^{16}$ | | | | Low $10^{13}$ | > $10^{16}$ |

EP 0 634 260 B1

# FIG.5

| | First crushing/dividing machine (41) | Second crushing/dividing machine (42) | Third crushing/dividing machine (43) |
| --- | --- | --- | --- |
| PE PP PVC | → PVC | → PP | → PE |

# FIG.6

Mixture of plastics

Deformation temperature →

>130°C — YES → PET

NO

X-ray irradiation →    Density → NO

Fluorescent x-ray detection — YES → PVC

>1.3 — YES → PVC

NO    PE,PP,PS,ABS | NO

Volume specific resistivity →

>10^16 — NO → ABS

PE,PP,PS | YES

EP 0 634 260 B1

FIG. 6 (contd.)

FIG.7

FIG.8

FIG. 9

FIG. 10

# FIG.11

EP 0 634 260 B1

FIG. 11 (contd.)

Recycling resource production process